# EUROPEAN PATENT APPLICATION

(11) **EP 4 722 485 A1**
(43) Date of publication of application: **08.04.2026**
(21) Application number: 25206174.2
(22) Date of filing: 01.10.2025
(51) Int. Cl.: E21B 7/20, E21B 10/32, E21B 17/20, E21B 19/22, E21B 43/10, F24T 10/17

(54) **SYSTEM AND METHOD FOR GEOTHERMAL WELL INSTALLATION**

(30) Priority: 01.10.2024 EP 24306614
(71) Applicant: Services Pétroliers Schlumberger, 75007 Paris (FR); Schlumberger Technology B.V., 2514 JG The Hague (NL)
(72) Inventor: THIERRY, Sylvain, 92142 Clamart (FR)
(74) Representative: Schlumberger Intellectual Property Department

(57) **Abstract**

A system and method are provided for installing a well for a borehole heat exchanger. The method includes drilling a hole formation to a predetermined depth relative to a ground surface, including operating a bottomhole assembly (BHA) including a drill bit (108) supported at a bottom end of a cable (118) positioned within a flexible tube (104). After drilling the hole formation to a predetermined depth, the BHA is retracted through the flexible tube to remove the BHA from the hole formation while the flexible tube remains in the hole formation.

## Description

### CROSS-REFERENCE TO RELATED APPLICATIONS

This application claims priority to and the benefit of European Patent Application No. EP24306614.9, filed October 1, 2024, which is incorporated herein by reference in its entirety.

### BACKGROUND

Geothermal energy systems utilize the relatively stable temperature of the earth to provide heating and cooling for buildings through ground source heat pumps and borehole heat exchangers. These systems typically involve drilling wells to predetermined depths and installing closed loop circuits that circulate fluid to transfer heat between the building and the ground. Conventional drilling methods for geothermal installations often involve dual string configurations with multiple drilling rods and casings, which can be time-consuming and labor-intensive operations requiring multiple operators and frequent pipe connections. The drilling process typically involves larger diameter holes to accommodate the drilling equipment and completion hardware, resulting in increased excavation volumes, higher cement requirements, and greater overall installation costs. Additionally, traditional installation methods may involve separate phases for drilling, probe installation, and cementing operations, each contributing to the total time and expense of geothermal well construction.

### SUMMARY

In one independent aspect, a method is provided for installing a well for a borehole heat exchanger, the method comprising: drilling a hole formation to a predetermined depth relative to a ground surface, drilling the hole formation including operating a bottom hole assembly (BHA) including a drill bit supported at a bottom end of a cable, the cable positioned within a flexible tube; and after drilling the hole formation to a predetermined depth, retracting the BHA through the flexible tube to remove the bottom hole assembly from the hole formation while the flexible tube remains in the hole formation.

In some aspects, the method further comprises, after drilling the hole formation to a predetermined depth and prior to retracting the BHA, operating a latch to uncouple the BHA from a lower end of the flexible tube.

In some aspects, the method further comprises, after retracting the BHA, securing the flexible tube within the hole formation by inserting cement between an outer surface of the flexible tube and an inner surface of the hole formation.

In some aspects, the method further comprises securing the flexible tube within the hole formation by heating the flexible tube and moving a mechanical conforming device through the flexible tube to deform the tube radially outward against a surface of the hole formation, wherein the mechanical conforming device is optionally part of the BHA.

In some aspects, the method further comprises, after retracting the BHA, inserting at least one inner tube through the flexible tube to form the borehole heat exchanger.

In some aspects, inserting an inner tube through the flexible tube includes inserting a bottom tube sealing assembly to facilitate fluid circulation between the flexible tube and the inner tube in a closed loop manner.

In some aspects, drilling the hole formation includes drilling the hole with a reamer in an extended state in which an outer diameter of the reamer is larger than a diameter of the flexible tube, and the method further comprises, after drilling the hole formation to a predetermined depth and prior to retracting the BHA, moving the reamer to a collapsed state in which the outer diameter of the reamer is smaller than the diameter of the flexible tube. The reamer is optionally part of the BHA.

In another independent aspect, a system is provided for installing a well for a ground source heat pump application, the system comprising: a cable, such as a wireline, having a lower end; a bottom hole assembly (BHA) supported adjacent the lower end of the cable, the BHA including a drill bit operable to excavate a hole; and a flexible tube extending around the cable, a lower end of the flexible tube being removably coupled to the BHA, wherein, while the flexible tube is coupled to the BHA, the flexible tube is movable with the BHA as the drill bit excavates the hole, and, while the flexible tube is uncoupled from the BHA, the flexible tube remains within the hole as the drill bit is removed from the hole.

In some aspects, the flexible tube is made from polyethylene.

In some aspects, the BHA is removably coupled to the flexible tube by a latch.

In some aspects, the BHA further includes a reamer, the reamer being removably coupled to the flexible tube, the reamer being movable between an extended state and a collapsed state, an outer diameter of the reamer being larger than a diameter of the flexible tube in the extended state, the outer diameter of the reamer being smaller than the diameter of the flexible tube in the collapsed state.

In some aspects, while the flexible tube is uncoupled from the BHA, the cable and the BHA are retractable through the flexible tube to leave the flexible tube within the hole.

In some aspects, the system further comprises an inner tube insertable into the flexible tube while the drill bit is removed from the hole.

In some aspects, the system further comprises a bottom tube sealing assembly to facilitate fluid circulation between the inner tube and a space positioned between the flexible tube and an outer surface of the inner tube in a closed loop manner.

In some aspects, the system further comprises a heating element for heating the flexible tube; and a mechanical conforming device, the mechanical conforming device movable through the flexible tube to deform the tube radially outward against a surface of the hole.

In some aspects, the heating element and the mechanical conforming device are arranged on the BHA.

### BRIEF DESCRIPTION OF THE DRAWINGS

In order to describe the manner in which the above-recited and other features of the disclosure can be obtained, a more particular description will be rendered by reference to specific embodiments thereof which are illustrated in the appended drawings. For better understanding, the like elements have been designated by like reference numbers throughout the various accompanying figures. While some of the drawings may be schematic or exaggerated representations of concepts, at least some of the drawings may be drawn to scale. Understanding that the drawings depict some example embodiments, the embodiments will be described and explained with additional specificity and detail through the use of the accompanying drawings in which:
FIG. 1 shows a schematic view of geothermal drilling and installation, according to aspects of the present disclosure;
FIG. 2 shows a geothermal installation;
FIG. 3 shows configurations for geothermal closed loop completions, including configurations according to aspects of the present disclosure;
FIG. 4 shows a comparison between standard drilling sections with sections according to aspects of the present disclosure;
FIG. 5 shows a cost comparison between standard drilling and drilling according to aspects of the present disclosure; and
FIG. 6 shows thermos-mechanical deformation of annular tubing according to aspects of the present disclosure.

### DETAILED DESCRIPTION

Before any embodiments are explained in detail, it is to be understood that the embodiments are not limited in its application to the details of the configuration and arrangement of components set forth in the following description or illustrated in the accompanying drawings. The embodiments are capable of being practiced or of being carried out in various ways. Also, it is to be understood that the phraseology and terminology used herein are for the purpose of description and should not be regarded as limiting. The use of "including," "comprising," or "having" and variations thereof are meant to encompass the items listed thereafter and equivalents thereof as well as additional items. Unless specified or limited otherwise, the terms "mounted," "connected," "supported," and "coupled" and variations thereof are used broadly and encompass both direct and indirect mountings, connections, supports, and couplings.

Relative terminology, such as, for example, "about," "approximately," "substantially," and the like, used in connection with a quantity or condition would be understood by those of ordinary skill to be inclusive of the stated value and has the meaning dictated by the context (for example, the term includes at least the degree of error associated with the measurement accuracy, tolerances (for example, manufacturing, assembly, use, and the like) associated with the particular value, and the like). Such terminology should also be considered as disclosing the range defined by the absolute values of the two endpoints. For example, the expression "from about 2 to about 4" also discloses the range "from 2 to 4." The relative terminology may refer to plus or minus a percentage (for example, 1%, 5%, 10%, or more) of an indicated value.

Functionality described herein as being performed by one component may be performed by multiple components in a distributed manner. Likewise, functionality performed by multiple components may be consolidated and performed by a single component. Similarly, a component described as performing particular functionality may also perform additional functionality not described herein. For example, a device or structure that is "configured" in a certain way is configured in at least that way but may also be configured in ways that are not explicitly listed.

The present disclosure relates to using a flexible tube (e.g., coil tubing) that both provides an outer tube during drilling and is left in place to serve as an outside tube for a completion of a co-axial geothermal well.

The present disclosure relates to systems and methods for installing wells for borehole heat exchangers that may be used in conjunction with ground source heat pump applications. The disclosed approach provides a streamlined drilling and installation process that addresses various challenges associated with conventional geothermal well construction techniques. In some cases, the system utilizes a flexible tube that serves dual functions throughout the installation process, thereby reducing operational complexity and associated costs.

The flexible tube functions as both a drilling component and a permanent element of the completed borehole heat exchanger system. During the drilling phase, the flexible tube may be positioned around a cable that supports a bottom hole assembly containing drilling equipment. The flexible tube advances with the drilling assembly as the hole formation progresses to a predetermined depth. In some cases, the flexible tube may be constructed from materials suitable for both drilling operations and long-term geothermal applications, such as polyethylene or other thermoplastic materials that provide adequate strength and thermal properties.

After drilling operations reach the target depth, the bottom hole assembly may be decoupled from the flexible tube and retracted through the interior of the flexible tube. The flexible tube remains in position within the drilled hole formation, where the flexible tube becomes the outer component of a coaxial heat exchanger configuration. In some cases, an inner tube may subsequently be inserted through the flexible tube to complete the closed-loop circulation system. This approach eliminates the need for separate drilling casing removal operations that are typically associated with conventional geothermal well installation methods.

The system may provide various operational advantages compared to traditional dual-string drilling configurations. In some cases, the continuous nature of the flexible tube eliminates the need for frequent pipe connections during drilling operations, which may reduce drilling time and personnel requirements. The flexible tube configuration may also allow for reduced drilling diameters compared to conventional approaches, which may decrease the volume of excavated material and reduce cement requirements for well completion. In some cases, the system may accommodate various drilling trajectories, including vertical, slanted, or deviated well paths, depending on site-specific requirements and geological conditions.

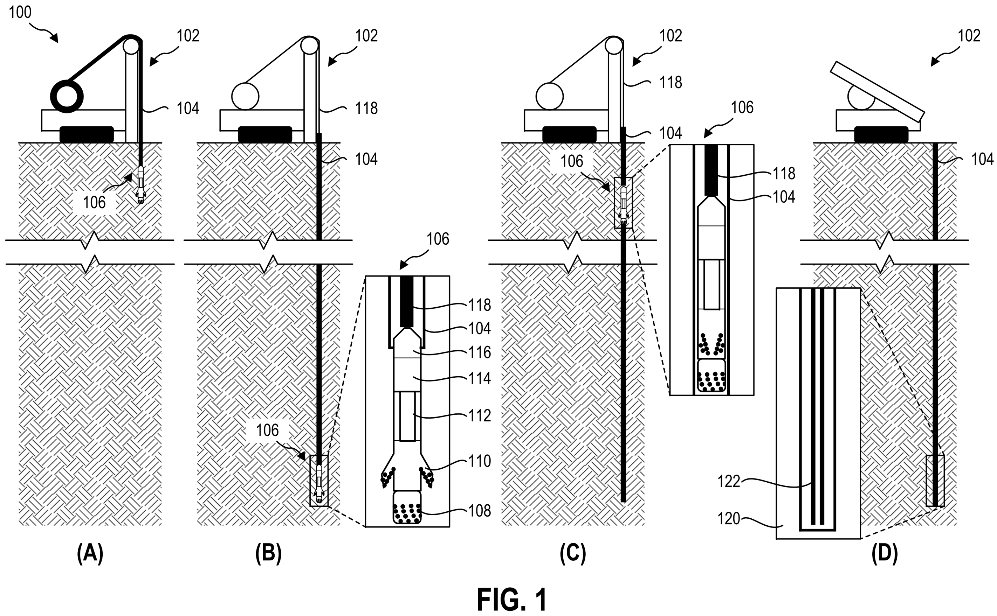

FIG. 1 shows a schematic view of one exemplary embodiment 100 of the present disclosure. The schematic view of FIG. 1 shows a system for geothermal probe drilling and installation using flexible, plastic coil tubing during drilling and a co-axial geothermal closed loop completion installation. In a first phase (A), a coil tubing drilling unit 102, a plastic coil 104 and a Bottom Hole Assembly (BHA) 106 are operated to form a hole. The coil 104 may be a flexible tube (for example, a plastic tube for example a polyethylene tube of 80 mm diameter and length of 200 m) (also referenced as 104). At a lower end of the flexible tube 104 is installed the BHA 106, which may include a drill bit 108 (e.g., rotary or hammer), a foldable reamer 110 (e.g., a retractable hole enlarger) movable between an extended state and a collapsed state, and a motor/turbine or hammer or electric motor mechanism 112.

The BHA 106 may also include one or more steering components 114 to facilitate a steering capability (e.g., rotary steerable, bent motor), as well as Logging While drilling (LWD) and/or Measurement While Drilling (MWD) telemetry, and a latch system 116 that removably couples the BHA 106 to the lower end of the flexible tube 104 such that the latch system 116 may uncouple the BHA 106 from the lower end of the flexible tube 104. Connected to the BHA 106 and located inside the plastic coil 104 can be attached a cable 118, such as a wireline (e.g., to supply electrical power and communication to the BHA 106), and/or an inner tube for fluid circulation. These different elements can be placed in various order from bottom to top. The BHA 106 may in some instances be attached to other type of cable that supply power and /or be attached to a cable that does not supply power, in which case the BHA 106 may include a battery. Examples of other types of cable include slicklines, for instance. The BHA 106 may be supported adjacent a lower end of the cable 118.

In a second phase shown at (B) in FIG. 1, the drilling is completed from a surface to a desired Total Depth (TD). Well trajectory can be vertical, slanted or deviated. Drilling is taking place until the TD is achieved. The tube 104 may be selected to have a predetermined length (e.g., TD plus a small additional amount, ε). Once the BHA 106 has reached bottom, the surface end of the coil 104 is accessible at the level of the coil tubing 104 surface drilling unit 102.

During Phase 3 shown at (C) of FIG. 1, a command is sent to the BHA 106 for the foldable reamer 110 to close and to collapse so that the maximum outer diameter of the BHA 106 becomes less than the inner diameter of the flexible, plastic coil tube 104. Another command is sent so that the mechanical link from the BHA 106 to the bottom end of the plastic is as well unlatched. Using pulling force from the wireline 118 (or inner tube) exerted at the surface, the BHA 106 is pulled back from the bottom to surface. At the end of phase 3, the hole has then been drilled to TD, the coil tube 104 is left in place and becomes the outside tube for a coaxial geothermal completion.

During Phase 4 shown at (D) of FIG. 1, the rest of the geothermal completion is installed. The space between the outside tube 104 (i.e., formed by the coil tubing) and formation is cemented in place, a bottom plug 120 is installed, and the inner tube 122 (i.e., the borehole heat exchanger) is installed within the outside tube 104. In addition to securing the coil tube 104 in place, the cement may also seal and hydraulically isolate the formation layers from one another. Additional phases for installing the well may be completed similar to a normal co-axial geothermal completion, and the well may be tested.

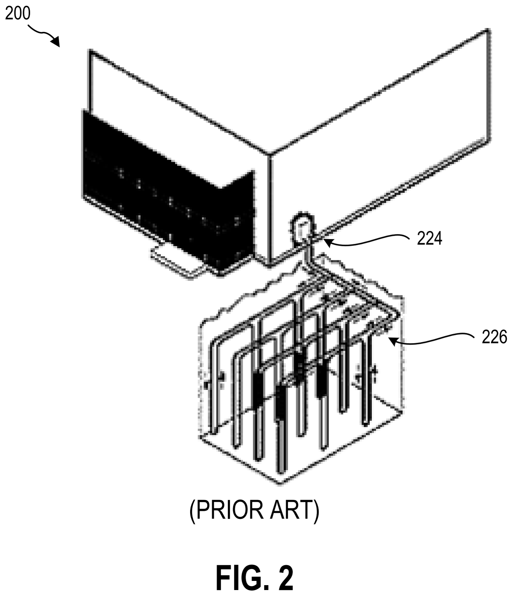

FIG. 2 shows an example embodiment of a geothermal installation with several wells drilled and connected to a single building. As shown in FIG. 2, a heating and cooling system 200 using shallow geothermal wells may include two main elements: a) a surface ground source heat pump (GSHP) 224 and b) one or several wells including borehole heat exchangers 226. The wells can be either open loop (e.g., in which water is pumped from an aquifer) or closed loop (e.g., wells are drilled, and a completion is installed so that the water/glycol water circulates in a closed loop - FIG. 2). Closed loop completions represent the bulk of the shallow geothermal wells installed in Europe, for example.

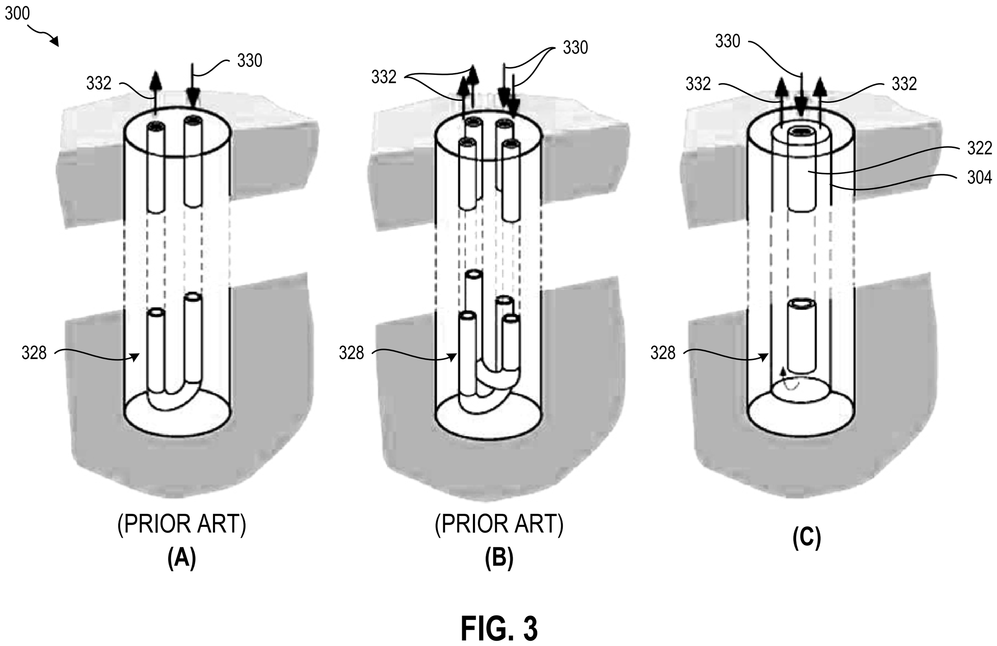

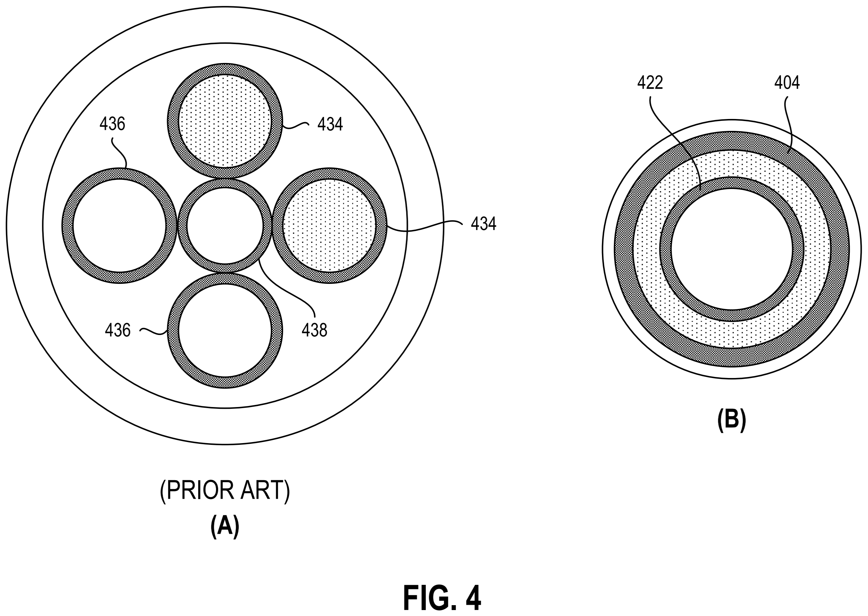

FIG. 3 shows three different embodiments for geothermal closed loop completions 300. As shown in FIG. 3, closed loop completions 300 may include single or double U-tube type circuits (shown at (A) and (B) of FIG. 3, respectively), or a co-axial type circuit (shown at (C) of FIG. 3). The single (A) and double (B) U-tube circuits of the closed loop completions 300 may be standard systems while the co-axial circuit at (C) is illustrative of the systems disclosed in the present disclosure, for example those systems also illustrated in FIGS. 1 and 4(B). The co-axial circuit shown at (C) of FIG. 3 may include a coil 304 and an inner tube 322, which may be analogous to the coil 104 and inner tube 122 shown in FIG. 1, respectively.

Any type of circuit may be installed in the wellbores drilled as per the current disclosure. One function of the closed loop system 300 is to create the maximum length of contact between the closed loop 328 and the ground to enable heat transfer. In a "heating mode," a cold fluid is circulated in the closed loop to extract calories from the surrounding hotter rock via conduction. This is schematized in FIG. 3, in which fluid that enters the loop at 330 is cold and exits at 332 at a warmer temperature. The well can be considered as a linear heat exchanger. The efficiency of this linear heat exchanger depends on several parameters, including temperature entering the loop 328; fluid flow rate and duty cycle; rock temperature; conductivity and thermal capacity; and geometry. A typical way to express the quality of a closed loop well is to express the capability of the system to extract Power (e.g., in watts [W]) per unit of distance (e.g., in meters [m]). A typical value for a shallow geothermal sonde is approximately 50 W/m.

A well may be constructed according to various techniques for drilling (rotary drilling, hammer drilling, with air, with mud, etc.), various types of completions (single u-tube, double u-tube, co-axial, etc.), and various cementing types and techniques. The selection of the technique may depend on factors pertaining to available equipment, geology (for example, the techniques are different on hard grounds such as granite/quartz or soft unconsolidated grounds), local regulation, etc. In the shallow geothermal industry, well construction is often handled by geothermal drillers that are typically responsible to: a) drill the wells; b) install the plastic completion; and c) cement the completion in place. Drillers typically operate these 3 steps under the guidance of regulatory norms to guarantee the quality, safety and environmental quality of the installed geothermal probes.

From an economical perspective, installing these probes is often expressed in terms of total cost/currency per unit of distance (e.g., dollars per meter, euros per meter). The technical-economic efficiency of the geothermal heat exchanger can be expressed in currency per unit of power (e.g., dollars per watt, euros per watt, etc.). For example, for a system having a cost of 80 dollars per meter and a power extraction capability of 50 W/m, a ratio of the two values provides an average cost of 1.6 dollars per watt. The system and method of this disclosure aids in reducing the technical-economic efficiency.

In some cost analyses of standard geothermal drilling in unconsolidated (soft sedimentary) formations, approximately 50% of cost may be attributable to the drilling operation itself, approximately 25% may be attributable to the probe installation, and approximately 25% may be attributable to the cement operation.

Among other things, the system and method of this disclosure may reduce cost in a few ways. First, the system and method may reduce "drilling time." In unconsolidated formations, standard drilling involves drilling with a dual string configuration, a cross-sectional view of which is shown at (A) of FIG. 4. The dual string configuration shown at (A) of FIG. 4 may include first and second U-tubes 434, 436 along with a central wireline 418 or other drilling cable. The first and second U-tubes 434, 436 may be analogous to the double U-tube configuration shown at (B) of FIG. 3. The drill stands are typically quite short (e.g., between approximately 2m to 4 m) and two stands (e.g., an inner rod and outer tube) are connected to one another. In some drilling operations, only 10% of the time is spent penetrating rock while the other 90% is attributable to handling the stand connections (reaming up and down, unscrewing/screwing stands, etc.). On the other hand, the system and method of this disclosure, the cross-sectional view of which is shown at (B) of FIG. 4, facilitates continuous drilling without requiring pipe connection(s) to be made, and therefore significantly reducing total time (in some cases, reducing the required time by a factor of ten).

Second, the system and method may reduce the number of people required for the operation. In conventional drilling, additional operators (perhaps three or four operators) are present on a surface, including a lead driller and typically two or three helpers whose main task is to handle the drilling rod feeding (which is a mostly manual operation). On the contrary, the system and method of this disclosure requires no (or very little) pipe handling as the coil progresses via an automated roll feed of the continuous pipe. Accordingly, the number of personnel can be reduced by a factor of between two to three.

Third, the system and method may reduce the drilling diameter (bit diameter). For drilling unconsolidated formations, one technique involves drilling with two concentric rod strings, which implies a larger than required drilling diameter. An annular string (often referred to as a "casing") is positioned around an inner string (often referred to as a "drill rod"). The casing is left in hole while the geothermal probes are lowered and removed before cementing. The casing is used to prevent the hole from collapsing and closing. The coil tube (CT) system and method of this disclosure shown at (B) of FIG. 4, on the other hand, leaves the coil tube 404 as the annular probe, and assists in preventing an unconsolidated zone from collapsing and closing the well. It is therefore possible to drill with a much smaller diameter (see comparison in FIG. 4).

In the example shown in FIG. 4 at (A), the standard drilling configuration (e.g., the dual string configuration) may have a diameter of about 152mm such that an excavated volume on a 200m deep wellbore would amount to about 3.6m^3. In contrast, the flexible coil tube configuration of the present disclosure shown at (B) of FIG. 4 may include about a 90mm diameter such that the excavated volume at the same 200m depth would be about 1.3m^3. The values given in the foregoing example are illustrative only and not meant to be limiting.

The inner tube 422 is shown at (B) of FIG. 4. The coil tube 404 may be analogous to the tube 304 shown at (C) of FIG. 3 and the tube 104 shown in FIG. 1. The inner tube 422 shown at (B) of FIG. 4 may be analogous to the inner tube 322 shown at (C) of FIG. 3 and the inner tube 122 shown in FIG. 1.

Reducing the bit diameter has several additional advantages: (a) the total amount of earth volume that is drilled is reduced (in the example of FIG. 4, the total earth volume is reduced by a factor of 2.85), thereby also reducing the cost related to drilled material surface handling and evacuation proportionally; (b) the quantity of cement/grout that is required to secure the well is also reduced by a large factor (in some cases, by a factor of 15); (c) the total quantity of energy that needs to be supplied to the bit to achieve a desired rate of penetration is reduced. The energy is directly proportional to a surface area that is cut away. In some cases, surface machine power can be reduced by a factor 2 to 3, leading to smaller, more compact and cheaper machines. In addition to the drilling aspects, there may also be time and cost reductions in the geothermal probe installation and during the cementing phase.

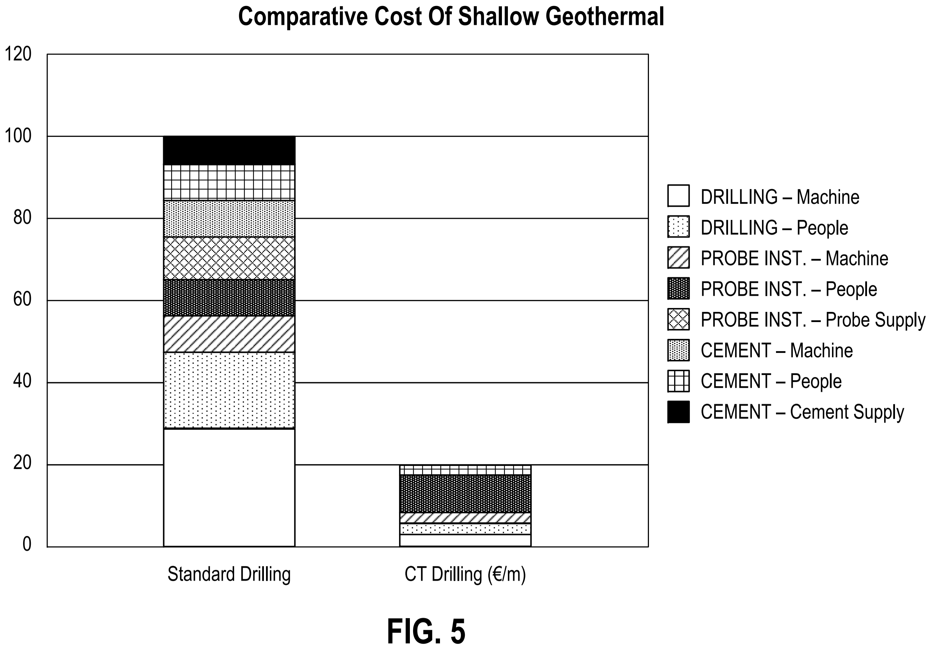

In some applications, an economic analysis shows that the system and method of this disclosure may reduce the cost of drilling by a factor 5. As shown in FIG. 5, in at least one non-limiting example, the cost of drilling is reduced from 100 €/m to 20 €/m.

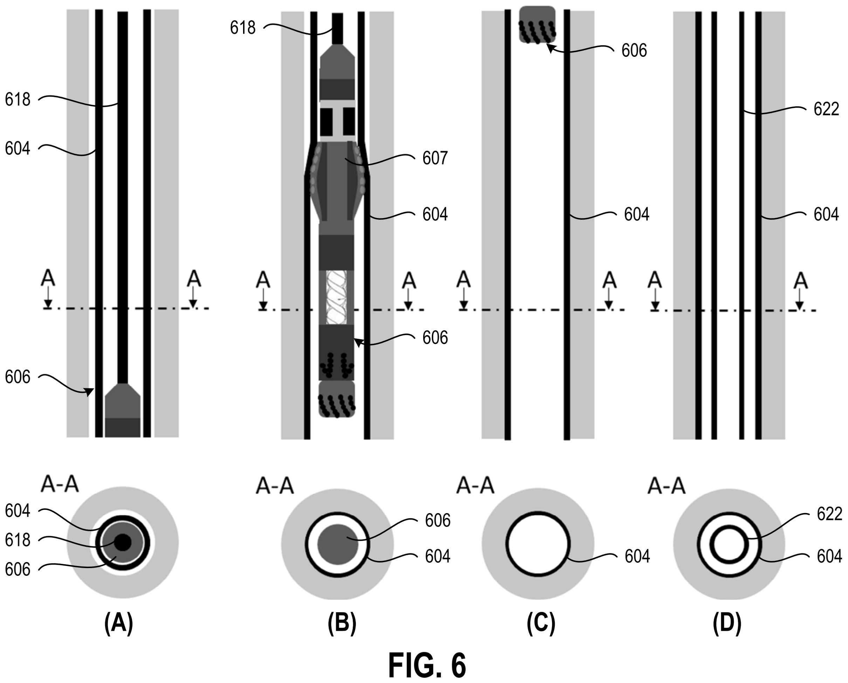

FIG. 6 shows a system and method for thermos-mechanical deformation to conform an annular tube against a formation. FIG. 6 shows a variation of the process described above with respect to FIG. 1, including a first step at (A), a second step at (B), a third step at (C), and a fourth step at (D). Each step (A), (B), (C), and (D) illustrate a cross-sectional view of the system taken at the plane indicated as A-A. As shown in FIG. 6, the drilling and insertion of the coil tubing 604 as an outside tube geothermal probe that is left in place may proceed as discussed above. Instead of cementing the probe in place to fill an annular gap between the external tube 604 and the formation, the outside probe may be *thermo-mechanically conformed* so that the gap would be closed and formation sealed, without needing cement. At (A) in FIG. 6, the plastic coil tubing 604 is left in place and a special downhole tool 607 to thermo-mechanically conform the tube is lowered inside this tube 604. In the illustrated example, the tool 607 may be a device that is present on the drilling BHA 606 and not specifically activated during the drilling (going down) phase but will be used when the BHA 606 is pulled out of hole (going up) as shown at (B) of FIG. 6. As a second example, the tool may be a specialized device (e.g., a wireline conveyed device) that is lowered after the drilling BHA 606 has been fully removed from hole.

During a step shown at (B) of FIG. 6, the special tool 607 is activated to conform the tube 604 against the formation and close the annular gap while going up. The special tool 607 could include (1) a heating element to soften the plastic tube to facilitate large plastic deformation at temperatures above its glass transition temperature, and (2) a mechanical conforming device to force the tube diameter to become enlarged, pushing the tube 604 radially outward against the formation. The process may be referred to as tube thermoforming using techniques from the plastic process industry (i.e. extrusion molding, blow-forming, and/or high-pressure molding). A curing/inspection device can be located below the active device to cure the enlarged diameter in place and/or inspect it for integrity. Tube conforming can be either continuous or repeated at regular intervals. The deformation should be of enough quality so that the external diameter of the tube 604 is set to conform against the inner diameter of the drilled open hole and to create a seal. This seal will have the function to ensure the well integrity (i.e. isolate potential aquifers at different depths).

At another step shown at (C) of FIG. 6, the process may be repeated as needed until reaching the surface and the tool is removed from the hole at the surface. The external tube 604 of the co-axial completion is permanently installed and there is no need for a cementing operation. At another step shown at (D) of FIG. 6, (and possibly after and inspection/test phase), the inner tube 622 of the completion is lowered. A plug is positioned at the bottom end of this tube 622 to fully close the inner diameter of the outer tube 604 and enable the closed loop circulation of the geothermal fluid during operation similar to that illustrated at (C) of FIG. 3 (e.g., fluid may flow down the hole through the inner tube 622 space and flow up the hole through the space between the outside of the inner tube 622 and the inside of the outer tube 604, or may flow in the opposite direction). Once the two co-axial tubes 604, 622 are in place using this technique, the surface set-up is installed. The rest of the downhole heat exchanger can proceed with traditional techniques.

Although certain aspects have been described with reference to certain examples, it is to be recognized that variations and modifications exist within the spirit and scope of one or more independent aspects. Various features and aspects are set forth in the following claims.

## Claims

1. A method for installing a well for a borehole heat exchanger, the method comprising:
drilling a hole formation to a predetermined depth relative to a ground surface, drilling the hole formation including operating a bottom hole assembly (BHA) including a drill bit supported at a bottom end of a cable, such as a wireline, the cable positioned within a flexible tube; and
after drilling the hole formation to the predetermined depth, retracting the BHA through the flexible tube to remove the BHA from the hole formation while the flexible tube remains in the hole formation.

2. The method of claim 1, further comprising, after drilling the hole formation to the predetermined depth and prior to retracting the BHA, operating a latch to uncouple the BHA from a lower end of the flexible tube.

3. The method of any preceding claim, further comprising, after retracting the BHA, securing the flexible tube within the hole formation by inserting cement between an outer surface of the flexible tube and an inner surface of the hole formation.

4. The method of any preceding claim, further comprising securing the flexible tube within the hole formation by heating the flexible tube and moving a mechanical conforming device through the flexible tube to deform the flexible tube radially outward against a surface of the hole formation, wherein the mechanical conforming device is optionally part of the BHA.

5. The method of any preceding claim, further comprising, after retracting the BHA, inserting at least one inner tube through the flexible tube to form the borehole heat exchanger.

6. The method of claim 5, wherein inserting an inner tube through the flexible tube includes inserting a bottom tube sealing assembly to facilitate fluid circulation between the flexible tube and the inner tube in a closed loop manner.

7. The method of any preceding claim, wherein drilling the hole formation includes drilling the hole formation with a reamer in an extended state in which an outer diameter of the reamer is larger than a diameter of the flexible tube, wherein the BHA optionally includes the reamer,
the method further comprising, after drilling the hole formation to the predetermined depth and prior to retracting the BHA, moving the reamer to a collapsed state in which the outer diameter of the reamer is smaller than the diameter of the flexible tube.

8. A system for installing a well for a ground source heat pump application, the system comprising:
a cable, such as a wireline, having a lower end;
a bottom hole assembly (BHA) supported adjacent the lower end of the cable, the BHA including a drill bit operable to excavate a hole; and
a flexible tube extending around the cable, the lower end of the flexible tube being removably coupled to the BHA, wherein, while the flexible tube is coupled to the BHA, the flexible tube is movable with the BHA as the drill bit excavates the hole, and, while the flexible tube is uncoupled from the BHA, the flexible tube remains within the hole as the BHA is removed from the hole.

9. The system of claim 8, wherein the flexible tube is made from polyethylene.

10. The system of claim 8 or 9, wherein the BHA is removably coupled to the flexible tube by a latch.

11. The system of any one of claims 8 to 10, wherein the BHA further includes a reamer the reamer being movable between an extended state and a collapsed state, an outer diameter of the reamer being larger than a diameter of the flexible tube in the extended state, the outer diameter of the reamer being smaller than the diameter of the flexible tube in the collapsed state.

12. The system of any one of claims 8 to 11, wherein, while the flexible tube is uncoupled from the BHA, the cable and the BHA are retractable through the flexible tube to leave the flexible tube within the hole.

13. The system of claim 12, further comprising an inner tube insertable into the flexible tube when the BHA is removed from the hole.

14. The system of claim 13, further comprising a bottom tube sealing assembly to facilitate fluid circulation between the inner tube and a space positioned between the flexible tube and an outer surface of the inner tube in a closed loop manner.

15. The system of any one of claims 8 to 14, further comprising a heating element for heating the flexible tube; and a mechanical conforming device, the mechanical conforming device movable through the flexible tube to deform the flexible tube radially outward against a surface of the hole, wherein the heating element and the mechanical conforming device are preferably arranged on the BHA.
